Europäisches Patentamt

European Patent Office

Office européen des brevets

(19)

(11) Veröffentlichungsnummer : **0 008 764**
**B1**

(12)

# EUROPÄISCHE PATENTSCHRIFT

(45) Veröffentlichungstag der Patentschrift :
22.09.82

(21) Anmeldenummer : 79103158.6

(22) Anmeldetag : 27.08.79

(51) Int. Cl.³ : **C 08 F   4/64**, C 08 F 10/06

(54) **Verfahren zur Herstellung eines Katalysators auf einem festen Träger und seine Verwendung zur Polymerisation von Propylen.**

(30) Priorität : 08.09.78 DE 2839136

(43) Veröffentlichungstag der Anmeldung :
19.03.80 (Patentblatt 80/06)

(45) Bekanntmachung des Hinweises auf die Patenterteilung : 22.09.82 Patentblatt 82/38

(84) Benannte Vertragsstaaten :
AT BE DE FR GB IT NL

(56) Entgegenhaltungen :
DE A 2 355 886
DE A 2 605 922
DE A 2 744 559

(73) Patentinhaber : BAYER AG
Zentralbereich Patente, Marken und Lizenzen
D-5090 Leverkusen 1, Bayerwerk (DE)

(72) Erfinder : Arlt, Klaus-Peter, Dr.
Bodelschwinghstrasse 14
D-4150 Krefeld (DE)
Erfinder : Grigo, Ulrich, Dr.
Steinstrasse 161
D-4150 Krefeld (DE)
Erfinder : Binsack, Rudolf, Dr.
Bethelstrasse 4a
D-4150 Krefeld (DE)

Imprimerie Jouve, 18, rue St-Denis, 75001 Paris, France

## Verfahren zur Herstellung eines Katalysators auf einem festen Träger und seine Verwendung zur Polymerisation von Propylen

Die vorliegende Erfindung betrifft ein Verfahren zur Herstellung einer auf einem Träger auf Basis von Magnesiumverbindungen aufgebrachten Katalysatorkomponente vom Ziegler-Natta-Typ, die für die Herstellung hochstereoregulärer Polymerer aus Propylen geeignet ist.

Beispiele für Katalysatoren mit hoher spezifischer Aktivität (gemessen in g Polymeres/g Ti.h.bar) und Stereospezifität (gemessen in % Löslichkeit in siedendem n-Heptan) bei der Polymerisation von $\alpha$-Olefinen sind in großer Zahl beschrieben, z.B. in der DE-OS 2 643 143, DE-OS 2 553 104 und DE-OS 2 636 193.

Die in der DE-OS 2 643 143 beschriebenen Katalysatoren werden im allgemeinen dadurch hergestellt, daß man in einer ersten Stufe wasserfreies $MgCl_2$ mit Ethylbenzoat einer Co-Vermahlung von ca. 100 Stunden unterwirft, in einer zweiten Stufe dann das Produkt der Co-Vermahlung mit $TiCl_4$ im Überschuß bei 90 bis 135 °C behandelt. In einer dritten Stufe wird dann der feste Komplex mit Aluminiumalkylen in Gegenwart von Estern reduziert, in einer weiteren, vor der Propylenzudosierung, mit Estern und ggf. Aluminiumalkylen im Reaktionsautoklaven kontaktiert.

Die spezifische Aktivität des so hergestellten Katalysators beträgt etwa 8 000-9 000 g PP/g Ti.h.bar, der Isotaktizitätsgrad beträgt durchschnittlich 92-94 %. Versuche, den Isotaktizitätsgrad durch Zugabe von mehr Elektronendonorverbindungen zu verbessern, führen zu einer Herabsetzung der katalytischen Aktivität.

Die DE-OS 2 636 193 beschreibt ein Polymerisationsverfahren unter Anwendung eines Katalysatorsystems auf Basis eines Titanhalogenid/Ester-Komplexes auf $MgCl_2$ und einem Komplex einer Trialkylaluminiumverbindung mit einem Carbonsäureester, das dadurch gekennzeichnet ist, daß die Organoaluminium-Komponente zusätzlich das Reaktionsprodukt einer Dialkylmagnesiumverbindung und eines Monoalkylaluminiumhalogenids enthält.

Die bei diesem Verfahren verwendeten Katalysatoren haben eine spezifische Aktivität von 8-10 kg PP/g Ti.h.bar, der Isotaktizitätsgrad liegt bei 94-95 %.

Das in der DE-OS 2 553 104 beschriebene Verfahren der Katalysator-Herstellung ist ein Zweistufenprozeß, dadurch gekennzeichnet, daß in einer ersten Stufe Magnesiumchlorid mit monocyclischen Carbonsäureestern durch mechanische Pulverisation kontaktiert wird und in einer zweiten die auf diese Art hergestellte Komponente mit einer Titanverbindung.

Nach dem beschriebenen Verfahren ist hier zwar eine zweite Elektronendonorbehandlung nicht mehr erforderlich, nachteilig sind jedoch die langen Vermahlzeiten der Komponenten und der geringe durchschnittliche Isotaktizitätsgrad von 91-92 % bei hinreichender katalytischer Aktivität.

Aus der DE-OS 2 355 886 ist es bekannt, Olefine in Gegenwart eines Katalysators zu polymerisieren. Der Katalysator stellt ein Addukt aus wasserfreiem $MgCl_2$ und einem Elektronendonor, wie einem aromatischen Carbonsäureester, dar, das mit einer Lösung von $TiCl_4$ in $SiCl_4$ als inertem Lösungsmittel kontaktiert wird. Anschließend wird der kontaktierte Trägerkatalysator unter anderem mit aluminiumorganischen Verbindungen zur Reaktion gebracht. Die molaren Verhältnisse von $TiCl_4$ zu Elektronendonorverbindung werden gemäß dieser Offenlegungsschrift so gewählt, daß $TiCl_4$ im Unterschuß, im Überschuß oder im gleichen molaren Verhältnis zur Elektronendonorverbindung vorliegt. Dieser Schrift läßt sich weder entnehmen noch daraus ableiten, daß bei der Polymerisation von Olefinen, insbesondere Propylen, ein Polypropylen mit einem Isotaktizitätsgrad von über 99 % erhalten werden kann, sofern bei der Herstellung des Katalysators das molare Verhältnis von $TiCl_4$ zu aromatischem Carbonsäureester 1 : 15 bis 1 : 25 beträgt, wie in der vorliegenden Anmeldung beansprucht.

Schließlich erteilt die DE-OS 2 605 922 die Lehre, stereoreguläre Polymere oder Copolymere von $\alpha$-Olefinen mit einem Isotaktizitätsgrad von etwa 95 % herzustellen. Dazu wird das Verfahren der Katalysatorherstellung gemäß DE-OS 2 355 886 so abgeändert, daß anstelle nur einer Elektronendonorverbindung eine Kombination aus einem Carbonsäureester (Komponente iii) und einer aktiven Wasserstoff enthaltenden Verbindung (Komponente ii) für die Kontaktierung des Trägers eingesetzt wird. Dabei soll das molare Verhältnis von $TiCl_4$ zu Carbonsäureester mindestens 0,01 zu 20-0,005 betragen, d.h., $TiCl_4$ kann im Unterschuß, im Überschuß oder im gleichen molaren Verhältnis wie der Elektronendonor Carbonsäureester vorliegen. Auch das molare Verhältnis von $TiCl_4$ zu aromatischem Carbonsäureester gemäß vorliegender Erfindung wird in dem angegebenen Bereich erfaßt. Da jedoch der Isotaktizitätsgrad des Polypropylens von durchschnittlich 95 % auf 85 % absinkt, wenn nur Carbonsäureester als Donor und nicht eine Donorkombination für die Kontaktierung des Trägers eingesetzt wird (siehe Vergleichsversuch 2 in der DE-OS 2 605 922), konnte nicht erwartet werden, daß bei Einsatz von nur (einem) aromatischen Carbonsäureester und Auswahl eines sehr engen molaren Bereiches von $TiCl_4$ zu aromatischem Carbonsäureester von 1 : 15 bis 1 : 25 aus einem außerordentlich breiten molaren Bereich bei der Katalysatorherstellung eine überraschende Steigerung des Isotaktizitätsgrades des Polypropylens bis über 99 % möglich ist.

Der vorliegenden Erfindung lag die Aufgabe zugrunde, ein Verfahren zur Herstellung eines Polymerisationskatalysators zu entwickeln, bei dem auf die langwierigen Vermahlprozesse, hohe Überschüsse an Titanverbindungen und gestaffelte Elektronendonorbehandlungen verzichtet werden kann.

Es wurde nun überraschenderweise gefunden, daß sich die Stereospezifität des Katalysators verbessern läßt, und daß die Herstellungszeit wesentlich verkürzt wird, wenn man die mit der Elektronendonorverbindung verrührte Magnesiumverbindung wie ein Magnesiumdihalogenid einer $TiCl_4$-Behandlung in der Weise unterwirft, daß man die Behandlung mit einer verdünnten Lösung von $TiCl_4$ in $SiCl_4$ als inertem Lösungsmittel vornimmt. Weitere Behandlungsschritte, die die Stereospezifität des Katalysators erhöhen sollen, können dann entfallen.

Gegenstand der Erfindung ist somit ein Verfahren zur Herstellung eines für die stereospezifische Polymerisation von Propylen geeigneten Katalysators durch Verrühren von wasserfreiem Magnesiumchlorid als festem Träger mit aromatischen Carbonsäureestern als Elektronendonor im molaren Verhältnis von 2 : 1 bis 12 : 1, anschließendes Kontaktieren des mit Elektronendonor verrührten Magnesiumchlorids mit $TiCl_4$ in $SiCl_4$ und daran anschließende Reduktion des $TiCl_4$ durch $AlR_nX_{3-n}$, worin R einen $C_1$-$C_{18}$-Alkylrest bedeutet, X ein Halogen, und n eine ganze Zahl, so daß $0 < n \leq 3$ ist, dadurch gekennzeichnet, daß das $TiCl_4$ und die Elektronendonorverbindung im molaren Verhältnis von 1 : 15 bis 1 : 25 eingesetzt werden.

Gegenstand der Erfindung ist weiter die Verwendung des erfindungsgemäß erhaltenen Katalysators zur Polymerisation von Propylen zu Polypropylen mit hohem Isotaktizitätsgrad.

Nach dem erfindungsgemäßen Verfahren wird die $TiCl_4$-Behandlung der mit dem Elektronendonor kontaktierten Magnesiumverbindung nicht mit reinem $TiCl_4$ im Überschuß bei 135°C durchgeführt, sondern mit einer berechneten Menge $TiCl_4$ im Unterschuß zum Elektronendonor in $SiCl_4$ als inertem Lösungsmittel bei einer Temperatur von 30-130°C, vorzugsweise zwischen 50-90°C. Durch dieses Verfahren ist gewährleistet, daß der fertige Trägerkatalysator nach der $TiCl_4$-Behandlung außer dem Elektronendonor im $TiCl_4$-Elektronendonorkomplex noch freien, für die Stereospezifität wichtigen Elektronendonor enthält.

Als feste Träger wird wasserfreies $MgCl_2$ eingesetzt, das aus Grignardlösungen in Diethylether bei $-5°C$ bis $+5°C$ mit trockener HCl gefällt wird und eine spezifische Oberfläche von ca. 20 m²/g aufweist. Besonders vorteilhaft ist $MgCl_2$, das durch Fällung mit trockener HCl aus der mit Toluol oder Chloroform im Volumenverhältnis 3 : 1 bis 7 : 1 verdünnten Grignardlösung zwischen $+5°C$ und $-5°C$ erhalten wird und eine spezifische Oberfläche von ca. 60 m²/kg aufweist. Zur Darstellung der Grignardlösungen eignen sich alle für diese Reaktionen üblichen Alkylhalogenide.

Als Elektronendonorkomponenten werden die Ester der aromatischen Carbonsäuren, wie z.B. Methylbenzoat und Ethylbenzoat oder die Ester der Alkyl- und Alkoxybenzoesäuren, wie z.B. Methyl-p-toluat, Ethyl-p-toluat, i-Propyl-p-toluat, n- und i-Amyltoluat, Phenyl-p-toluat, n-Butyl-p-toluat oder Methylanisat, Ethylanisat, i-Propylanisat, i-Butylanisat, Phenylanisat, Benzylanisat, Methyl-p-ethoxybenzoat und Methyl-o-ethoxybenzoat.

Die Elektronendonoren werden im molaren Verhältnis $MgCl_2$/Elektronendonor = 2 : 1 bis 12 : 1 mit $MgCl_2$ innerhalb von 1-3 Std. bei Raumtemperatur verrührt. Vorteilhaft ist ein $MgCl_2$/Elektronendonor-Verhältnis von 3 : 1 bis 8 : 1, besonders vorteilhaft erweist sich ein $MgCl_2$/Elektronendonor-Verhältnis von 4 : 1 bis 6 : 1.

Für die erfindungsgemäße Kontaktierung des mit dem Elektronendonor verrührten $MgCl_2$ wird einer Lösung von $TiCl_4$ ist in $SiCl_4$ als inerten Lösungsmittel verwendet. Das Molverhältnis $TiCl_4$ zu Elektronendonor beträgt 1 : 15 bis 1 : 25, besonders bevorzugt ist ein Verhältnis von 1 : 18 bis 1 : 22.

Geeignete Verbindungen als Reduktionsmittel sind aluminiumorganische Verbindungen der allgemeinen Formel $AlR_nX_{3-n}$, in der R ein $C_1$-$C_{18}$-Alkylrest von X Halogen bedeutet, vorzugsweise Cl. n steht für eine ganze Zahl, so daß $0 < n \leq 3$ ist. Besonders geeignet ist Diethylaluminiumchlorid.

Im allgemeinen reduziert man bei Temperaturen zwischen 50°C und 100°C, insbesondere zwischen 60 und 80°C in einem gegenüber den Reaktionspartnern inerten Verdünnungsmittel. Geeignet sind aliphatische und cycloaliphatische Kohlenwasserstoffe mit 5-18 C-Atomen. Besonders vorteilhaft ist Isooctan. Man legt die feste Komponente als 4-6 Gew.%ige Suspension in Isooctan vor und gibt das Reduktionsmittel unter Rühren in die Suspension in einem bevorzugten Al/Ti-Verhältnis von 50 bis 100 : 1. Die Komponenten werden bei erhöhter Temperatur einen angemessenen Zeitraum kontaktiert. Vorteilhaft ist eine Behandlung bei 60°C während 10-20 min.

Die so erhaltene Suspension des katalytischen Komplexes eignet sich zur stereospezifischen Polymerisation von Propylen.

Besonders vorteilhaft läßt sich mit dem beschriebenen System bei guten Ausbeuten Polypropylen mit gegenüber dem Stand der Technik erhöhter Isotaktizität herstellen.

Die Polymerisationsbedingungen sind an sich bekannt. Man arbeitet bei Polymerisationstemperaturen zwischen 20 und 100°C, vorzugsweise zwischen 40 und 80°C und bei Partialdrücken der Monomeren von 1 bar und darüber. Die Polymerisation kann in Gegenwart oder Abwesenheit eines inerten Kohlenwasserstoffs und in der Gasphase durchgeführt werden. Vorteilhaft werden die für die Reduktionen angeführten Lösungsmittel eingesetzt. Während der Polymerisation kann weiteres Aluminiumalkyl zudosiert werden. Durch diese Maßnahme steigt die katalytische Aktivität im allgemeinen um 20-30 %. Besonders geeignet als zusätzliche Aktivatoren sind aluminiumorganische Verbindungen, die kein Halogen mehr enthalten, wie z.B. Triethylaluminium, Triisopropylaluminium und Tri-n-butylaluminium, besonders vorteilhaft ist Triethylaluminium, das im molaren Verhältnis Ti/Al = 1 : 50 bis 1 : 200 zudosiert werden kann. Auch durch diese Maßnahme erhöht sich die katalytische Aktivität, jedoch nicht auf Kosten der Isotaktizität, wie allgemein bei Ziegler-Natta-Systemen beobachtet werden kann. Die spezifische Ausbeute kann weiterhin durch Zusatz von Wasserstoff erhöht werden. Diese Maßnahme führt gleichzeitig zu einer Erniedrigung des Molekulargewichts bzw. zu einer Erhöhung des Schmelzindex.

Die Erfindung wird durch folgende Beispiele erläutert ; die Prozentangaben in den Beispielen beziehen sich auf das Gewicht.

### Herstellung des festen Trägers

#### Methode I

In einem 250 ml Kolben werden in 150 ml getrocknetem Diethylether 36,47 g = 1,5 Mol Mg-Späne bei Rückflußtemperatur vorgelegt, und anschließend werden 132 ml = 1,5 Mol n-Propylchlorid in 300 ml trockenem Diethylether zugetropft. Nach Beendigung der Reaktion wird vom ungelösten Mg durch Filtrieren durch Glaswolle abgetrennt. Zu dem Filtrat werden 1 200 ml Toluol zugegeben, und nach dem Abkühlen auf 0 °C wird trockenes HCl-Gas eingeleitet. Nach vollständiger Fällung wird filtriert und 5mal mit Isooctan bei Raumtemperatur gewaschen. Alle Operationen werden unter Argon durchgeführt. Der Rückstand wird in Vakuum bei 80 °C getrocknet. Die Bestimmung der spezifischen Oberfläche nach der modifizierten BET-Methode nach F.M. Nelsen and F.T. Eggertsen [Analyt. Chem. *30*, S. 1387 (1958)] ergibt 70 m$^2$/g, die Ausbeute beträgt 120,7 g.

#### Methode II

Man verfährt wie nach Methode I, jedoch ohne Hinzufügen von Toluol als Verdünnungsmittel. Die Ausbeute beträgt 115 g, es werden 20 m$^2$/g spezifische Oberfläche ermittelt.

### Beispiel 1

#### Herstellung der Katalysatorkomponente

Unter Argon werden 7,98 g = 0,083 Mol MgCl$_2$, hergestellt nach Methode I mit 2,52 g = 0,018 Mol Ethylbenzoat 5 Stunden bei Raumtemperatur verrührt. Dieses mit Ester verrührte MgCl$_2$ wird mit einer Lösung, bestehend aus 0,16 g = 0,84 mMol TiCl$_4$ in 148,3 g SiCl$_4$ = 0,872 Mol 2 Stunden bei 70 °C behandelt, anschließend wird bei dieser Temperatur filtriert und 2 mal bei 80-90 °C mit jeweils 100 ml Isooctan gewaschen. Der Rückstand von 9,9 g weißem Pulver wird im Vakuum bei 80 °C getrocknet.

Die Analyse ergibt 0,29 % Ti ; 53,4 % Cl ; 18,60 % Mg und 27,1 % Ester, die spezifische Oberfläche beträgt 55 m$^2$/g.

### Polymerisation von Propylen in Isooctan

1,31 g der festen katalytischen Komponente, die 0,003 8 g Ti enthält, werden in 50 ml Isooctan mit 0,7 ml Diethylaluminiumchlorid 15 min bei 60 °C verrührt. In einen Argon enthaltenden 21 Glasautoklaven werden 800 ml Isooctan vorgelegt. Nach Zugabe der Suspension des katalytischen Komplexes werden 0,8 ml = 10,9 mMol Triethylaluminium zudosiert. Bei Erreichen der Polymerisationstemperatur von 70 °C wird 1 Stunde bei 4 bar Propylendruck polymerisiert, wobei der Druck durch ständiges Nachdrücken von Propylen konstant gehalten wird. Am Ende der Reaktion wird nicht umgesetztes Propylen abgeblasen und die Polymersuspension mit einem Überschuß eines Methanol/Butanol-Gemisches behandelt.

Nach Abfiltrieren und Trocknen bei 100 °C werden 90 g Polypropylen (= PP) erhalten, das einen in siedendem n-Heptan unlöslichen Anteil von 99,4 % und einen in siedendem Diethylether unlöslichen Anteil von 99,9 % enthält. Dies entspricht einer spezifischen Ausbeute von 5,9 kg PP/g Ti.h.bar.

### Beispiel 2

Der Katalysator wird, wie in Beispiel 1 beschrieben, hergestellt, mit der Ausnahme, daß als fester Träger MgCl$_2$, nach Methode II hergestellt, eingesetzt wird. Die spezifische Oberflächenanalyse ergibt einen Wert von 18 m$^2$/g, die elementaranalytischen Werte entsprechen denen von Beispiel 1.

Die Polymerisation wird mit 1,4 g Katalysator und gleichen molaren Al/Ti-Verhältnissen wie in Beispiel 1 durchgeführt. Es werden 50 g PP erhalten mit einem in seidendem n-Heptan unlöslichen Anteil von 99,1 %. Die spezifische Ausbeute beträgt für diesen Katalysator somit 3,2 kg PP/g Ti.h.bar.

### Beispiel 3

Man verfährt wie in Beispiel 1 angegeben, mit der Ausnahme, daß sowohl in der Reduktionsstufe als auch zur Reaktivierung Triethylaluminium in molaren Verhältnissen wie in Beispiel 1 verwendet wird.

Die Polymerisation wird mit 1,4 g fester Katalysatorkomponente durchgeführt. Es werden 65 g PP mit einem in siedendem n-Heptan unlöslichen Anteil von 90 % erhalten. Das entspricht einer spezifischen Aktivität von 4,2 kg PP/g Ti.h.bar.

### Ansprüche

1. Verfahren zur Herstellung eines für die stereospezifische Polymerisation von Propylen geeigneten Katalysators durch Verrühren von wasserfreiem Magnesiumchlorid als festem Träger mit aromatischen Carbonsäureestern als Elektronendonor im molaren Verhältnis von 2 : 1 bis 12 : 1, ansschließendes Kontaktieren des mit Elektronendonor verrührten Magnesiumchlorids mit $TiCl_4$ in $SiCl_4$ und daran anschließende Reduktion des $TiCl_4$ durch $AlR_nX_{3-n}$, worin R einen $C_1$-$C_{18}$-Alkylrest bedeutet, X ein Halogen, und n eine ganze Zahl, so daß $0 < n \leqslant 3$ ist, dadurch gekennzeichnet, daß das $TiCl_4$ und die Elektronendonorverbindung im molaren Verhältnis von 1 : 15 bis 1 : 25 eingesetzt werden.

2. Verwendung des nach Anspruch 1 hergestellten Katalysators zur Polymerisation von Propylen zu Polypropylen mit hohem Isotaktizitätsgrad.

## Claims

1. Process for the preparation of a catalyst suitable for the stereospecific polymerisation of propylene by stirring anhydrous magnesium chloride as the solid carrier with aromatic carboxylic acid esters as the electron donor in a molar ratio of 2 : 1 to 12 : 1, subsequently contacting the magnesium chloride mixed with the electron donor with $TiCl_4$ in $SiCl_4$ and then reducing the $TiCl_4$ with $AlR_nX_{3-n}$, wherein R denotes a $C_1$-$C_{18}$ alkyl radical, X denotes a halogen and n is an integer such that $0 < n \leqslant 3$, characterised in that the $TiCl_4$ and the electron donor compound are used in a molar ratio of 1 : 15 to 1 : 25.

2. Use of the catalyst prepared according to Claim 1 for the polymerisation of propylene to give polypropylene with a high degree of isotacticity.

## Revendications

1. Procédé de fabrication d'un catalyseur convenant pour la polymérisation stéréospécifique du propylène, par agitation de chlorure de magnésium anhydre comme support solide avec des esters d'acides carboxyliques aromatiques comme donneur d'électrons dans le rapport molaire 2 : 1 à 12 : 1, par contact consécutif du chlorure de magnésium agité avec le donneur d'électrons avec du $TiCl_4$ dans du $SiCl_4$ et par réduction consécutive du $TiCl_4$ par du $AlR_nX_{3-n}$ où R signifie un radical alcoyle en $C_1$-$C_{18}$, X un halogène et n un nombre entier tel que $0 < n \leqslant 3$, caractérisé en ce que le $TiCl_4$ et le composé donneur d'électrons sont utilisés dans le rapport molaire de 1 : 15 à 1 : 25.

2. Utilisation du catalyseur préparé selon la revendication 1 pour la polymérisation du propylène en polypropylène à haut degré d'isotacticité.